# EUROPEAN PATENT APPLICATION

(11) **EP 2 633 994 A1**
(43) Date of publication of application: **04.09.2013**
(21) Application number: 13157060.8
(22) Date of filing: 27.02.2013
(51) Int. Cl.: B32B 7/12, B32B 27/08, B41J 2/32, C09F 7/02, G09F 3/02, G09F 3/10

(54) **Pressure-Sensitive Adhesive Label and Label Issuing Device**

(30) Priority: 28.02.2012 JP 2012040951
(71) Applicant: Seiko Instruments Inc., Chiba-shi, Chiba (JP)
(72) Inventor: Tani, Kazuo, Chiba-shi,, Chiba (JP); Sato, Yoshinori, Chiba-shi,, Chiba (JP)
(74) Representative: Miller Sturt Kenyon

(57) **Abstract**

A pressure-sensitive adhesive label includes: a base; the pressure-sensitive adhesive layer provided on the base; and a thermosensitive film provided on the pressure-sensitive adhesive layer. The base is made of one of paper and a polyolefin-based polymer. The thermosensitive film is opened by heating to expose the pressure-sensitive adhesive layer. The thermosensitive film is opened to form an opening with a diameter equal to or more than 40 µm. The pressure-sensitive adhesive layer has a thickness in a range of from 20 µm to 300 µm. The pressure-sensitive adhesive label has pressure-sensitive adhesive strength with respect to the adherend of 1 N/(50 mm width) to 20 N/(50 mm width).

## Description

The present invention relates to a pressure-sensitive adhesive label that does not have pressure-sensitive adhesiveness at a time of storage and is allowed to exhibit pressure-sensitive adhesiveness at a time of use.

In recent years, pressure-sensitive adhesive labels have been used for a price indication label, a product indication label, an advertisement label, a seal label for a package, and the like. The pressure-sensitive adhesive label is formed of a base including an indication recording layer, a pressure-sensitive adhesive layer, and a release sheet. When the pressure-sensitive adhesive label is adhered to an adherend, the release sheet is peeled, and the pressure-sensitive adhesive label is adhered to the adherend via the exposed pressure-sensitive adhesive layer. A typical pressure-sensitive adhesive label is formed by adhering a band-shape release sheet to a pressure-sensitive adhesive layer formed by coating the entire reverse surface of a band-shaped base with a pressure-sensitive adhesive, and stamping out the resultant pressure-sensitive adhesive layer. Therefore, when a release sheet is peeled and a pressure-sensitive adhesive label is adhered to an adherend, the pressure-sensitive adhesive label is adhered to the adherend over the entire reverse surface of the pressure-sensitive adhesive label. However, depending on applications, there may be the case in which it is necessary to adhere a pressure-sensitive adhesive label to an adherend while partially sealing the pressure-sensitive adhesive strength of the pressure-sensitive adhesive label, instead of adhering the pressure-sensitive adhesive label to the adherend over the entire reverse surface of the pressure-sensitive adhesive label. Further, the release sheet peeled off at a time of using the pressure-sensitive adhesive label is discarded without being re-used. Therefore, an environmental burden cannot be alleviated.

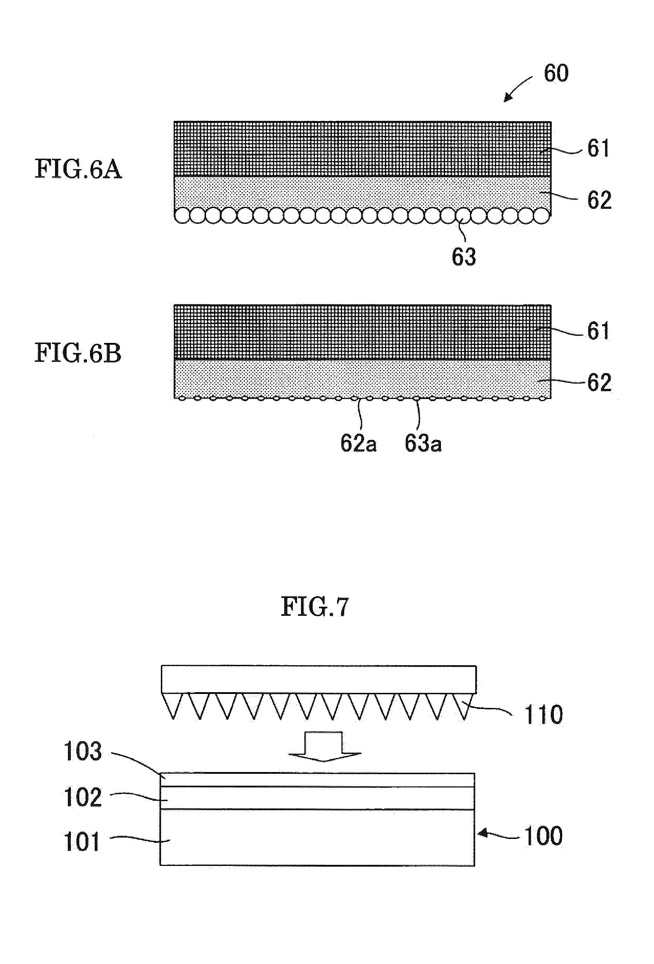

FIGS. 6A and 6B are cross-sectional side views of a thermosensitive pressure-sensitive adhesive member 60 described in Japanese Patent Application Laid-open No. Hei 9-111203. As illustrated in FIG. 6A, the thermosensitive pressure-sensitive adhesive member 60 has a configuration in which a pressure-sensitive adhesive layer 62 is provided under a base sheet 61, and a microcapsule layer 63 is provided so as to cover the pressure-sensitive adhesive surface of the pressure-sensitive adhesive layer 62. The microcapsule layer 63 has no pressure-sensitive adhesiveness, and hence a release sheet is not required. The microcapsule layer 63 is a substantially single layer of hollow microcapsules and has a melting point of, for example, about 100°C to 180°C. When the microcapsule layer 63 is heated to this temperature, the microcapsule layer 63 is broken, and the volume thereof is reduced (63a). Consequently, a pressure-sensitive adhesive surface 62a of the pressure-sensitive adhesive layer 62 is exposed to exhibit pressure-sensitive adhesiveness.

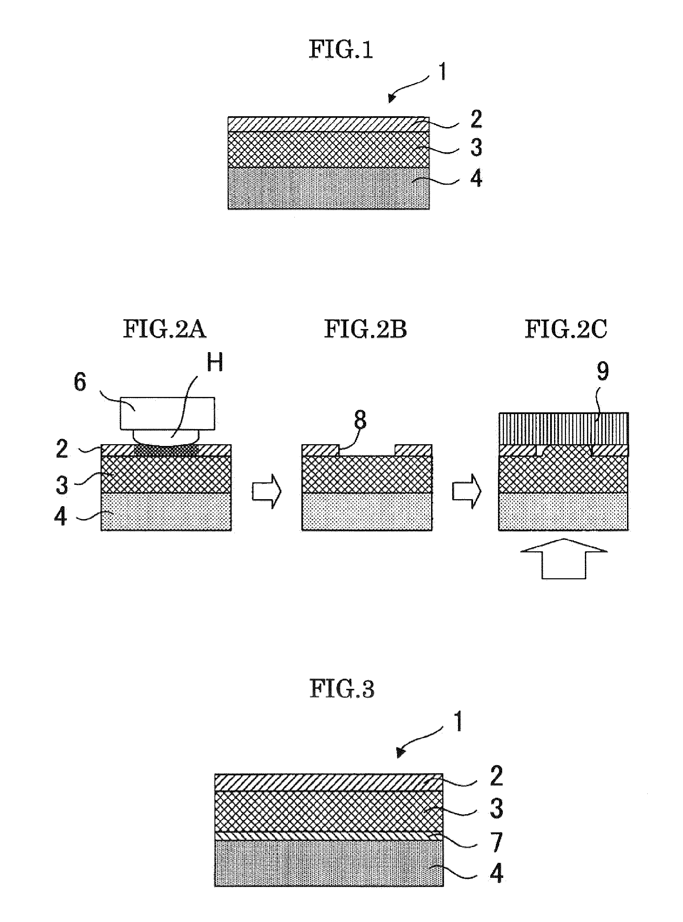

Further, Japanese Patent Application Laid-open No. 2006-78733 describes a pressure-sensitive adhesive label which does not use a release sheet and solves a problem such as blocking. FIG. 7 (FIG. 2 of Japanese Patent Application Laid-open No. 2006-78733) illustrates a laminated structure of a pressure-sensitive adhesive label 100. As illustrated in FIG. 7, the pressure-sensitive adhesive label 100 has a laminated structure in which a base 101, a pressure-sensitive adhesive 102, and a resin film 103 are laminated. The resin film 103 is made of a polyester film and has a thickness of 1 to 3 µm. The pressure-sensitive adhesive label 100 prevents blocking during storage by covering the surface of the pressure-sensitive adhesive with the resin film 103, instead of using a release sheet or a thermosensitive pressure-sensitive adhesive. During use, holes are formed in the resin film 103 through use of needles 110 or holes are formed in a stretched polyester film used as the resin film by a heating system, for example, thermal head heating to break a blocking prevention function and expose the pressure-sensitive adhesive of an underlying layer. In this manner, pressure-sensitive adhesive strength is exhibited.

In the thermosensitive pressure-sensitive adhesive member 60 of Japanese Patent Application Laid-open No. Hei 9-111203, the microcapsule layer 63 has a spherical shape. Therefore, when the microcapsule layer 63 comes into contact with a heat source, the microcapsule layer 63 comes into point contact with the heat source, and hence, heat conductivity is low and large heat energy is required for breaking the microcapsule layer 63. Therefore, the thermosensitive pressure-sensitive adhesive member 60 is not suitable for label issuance with low power consumption, which does not result in alleviation of an environmental burden. Further, although describing that the microcapsule layer 63 is heated to reduce a volume to expose the pressure-sensitive adhesive layer 62, Japanese Patent Application Laid-open No. Hei 9-111203 does not describe how to improve pressure-sensitive adhesiveness of the pressure-sensitive adhesive layer 62 to be exposed through an opening formed by opening a part of the microcapsule layer 63, and hence, it is unclear how to improve pressure-sensitive adhesiveness.

Further, in Japanese Patent Application Laid-open No. 2006-78733, when the pressure-sensitive adhesive label is issued continuously, the resin film which is on a pressure-sensitive adhesive surface side of the label is brought into contact with and passed through a roller having a needle-shaped surface. Consequently, holes are opened in the resin film to expose the pressure-sensitive adhesive. However, when holes are opened in the resin film, the pressure-sensitive adhesive adheres to the needles, and when the roller is rotated, the resin film is pulled by the roller to be further broken. Therefore, the position and area of a region in which pressure-sensitive adhesiveness is to be expressed cannot be controlled. Further, although describing that holes are opened in the resin film by thermal head heating to break a blocking prevention function, Japanese Patent Application Laid-open No. 2006-78733 does not describe how to improve pressure-sensitive adhesiveness between the adherend and the pressure-sensitive adhesive exposed when a part of the resin film is opened, and thus, it is unclear how to improve pressure-sensitive adhesiveness.

The pressure-sensitive adhesive label is used for various adherends under various environments. If desired pressure-sensitive adhesive strength can be ensured between an adherend surface and the pressure-sensitive adhesive layer when a part of the film covering the pressure-sensitive adhesive layer is opened, a pressure-sensitive adhesive label with high convenience can be provided.

According to an exemplary embodiment of the present invention, there is provided a pressure-sensitive adhesive label, including: a base; a pressure-sensitive adhesive layer provided on the base; and a thermosensitive film provided on the pressure-sensitive adhesive layer. The base is made of one of paper and a polyolefin-based polymer. The thermosensitive film is opened by heating to expose the pressure-sensitive adhesive layer. The thermosensitive film is opened to form an opening with a diameter equal to or more than 40 µm. The pressure-sensitive adhesive layer has a thickness in a range of from 20 µm to 300 µm.

Preferably, the pressure-sensitive adhesive label has pressure-sensitive adhesive strength with respect to an adherend of 1 N/(50 mm width) to 20 N/(50 mm width).

Further, the paper may include any one of glassine paper, high-quality paper, art paper, design paper, Japanese paper, a non-woven fabric, and a synthetic resin.

Further, the pressure-sensitive adhesive label may further include a buffer member between the base and the pressure-sensitive adhesive layer.

Further, the pressure-sensitive adhesive label may further include an indication layer on a side of the base opposite to the pressure-sensitive adhesive layer.

Further, the base may serve as an indication layer.

Further, the indication layer may include a thermosensitive color-developing layer.

According to an exemplary embodiment of the present invention, there is provided a label issuing device, including: a conveying part for conveying a pressure-sensitive adhesive label including a base, a pressure-sensitive adhesive layer provided on the base, and a thermosensitive film provided on the pressure-sensitive adhesive layer; a heating part for heating the thermosensitive film to form an opening to expose the pressure-sensitive adhesive layer; and a control part for controlling the conveying part and the heating part. The thermosensitive film is opened by heating to expose the pressure-sensitive adhesive layer. The thermosensitive film is opened to form an opening with a diameter equal to or more than 40 µm. The pressure-sensitive adhesive layer has a thickness in a range of from 20 µm to 300 µm.

Preferably, the pressure-sensitive adhesive label has pressure-sensitive adhesive strength with respect to an adherend of 1 N/(50 mm width) to 20 N/(50 mm width).

Further, the pressure-sensitive adhesive label may further include one of an indication layer, which is provided on a side of the base opposite to the pressure-sensitive adhesive layer, and an indication layer corresponding to the base. The heating part may heat the indication layer to perform recording.

The pressure-sensitive adhesive label of the exemplary embodiment of the present invention includes the base, the pressure-sensitive adhesive layer provided on the base, and the thermosensitive film provided on the pressure-sensitive adhesive layer. The base is made of one of paper and a polyolefin-based polymer, and the thermosensitive film is opened by heating to expose the pressure-sensitive adhesive layer. Thus, a pressure-sensitive adhesive region and the pressure-sensitive adhesive strength of the pressure-sensitive adhesive label can be set immediately before the use, and a contact area of the pressure-sensitive adhesive layer with respect to the adherend is enlarged in accordance with the application of the pressure-sensitive adhesive label. Accordingly, the pressure-sensitive adhesive label having increased pressure-sensitive adhesive strength can be provided.

Embodiments of the present invention will now be described by way of further example only and with reference to the accompanying drawings, in which:
FIG. 1 is a schematic cross-sectional view of a pressure-sensitive adhesive label according to a first embodiment of the present invention;
FIGS. 2A to 2C are explanatory views illustrating a state in which the pressure-sensitive adhesive label according to the first embodiment of the present invention exhibits pressure-sensitive adhesiveness;
FIG. 3 is a schematic cross-sectional view of a pressure-sensitive adhesive label according to a second embodiment of the present invention;
FIG. 4 is a schematic structural view of a label issuing device according to a third embodiment of the present invention;
FIG. 5 is a schematic structural view of a label issuing device according to a fourth embodiment of the present invention;
FIGS. 6A and 6B are side views of a conventionally known thermosensitive pressure-sensitive adhesive member; and
FIG. 7 is a view illustrating a laminated structure of a conventionally known pressure-sensitive adhesive label.

FIG. 1 is a schematic cross-sectional view of a pressure-sensitive adhesive label 1 according to a first embodiment of the present invention. As illustrated in FIG. 1, the pressure-sensitive adhesive label 1 includes a base 4, a pressure-sensitive adhesive layer 3 provided on the base 4, and a thermosensitive film 2 provided on the pressure-sensitive adhesive layer 3. The base 4 is made of one of paper and a polyolefin-based polymer. The thermosensitive film 2 is opened by heating, and the pressure-sensitive adhesive layer 3 is exposed through the opening. When the pressure-sensitive adhesive layer 3 is exposed, the pressure-sensitive adhesive label 1 exhibits pressure-sensitive adhesiveness. The base 4 can be used as an indication layer to be used for recording a character and graphic on a side of the base 4 opposite to the pressure-sensitive adhesive layer 3. Further, by forming the indication layer as a thermosensitive color-developing layer, a character and graphic can be recorded on the indication layer by a heat-generating body of a thermal printer or the like.

FIGS. 2A to 2C are explanatory views illustrating a state in which the pressure-sensitive adhesive label 1 according to the first embodiment of the present invention exhibits pressure-sensitive adhesiveness. A thermal head 6 is used as heating means. As illustrated in FIG. 2A, a heat-generating part H of the thermal head 6 is brought into contact with the thermosensitive film 2 of the pressure-sensitive adhesive label 1. Then, as illustrated in FIG. 2B, the heated thermosensitive film 2 is melted and shrinks, and an opening 8 is formed in the thermosensitive film 2 to expose the pressure-sensitive adhesive layer 3. Next, as illustrated in FIG. 2C, when the pressure-sensitive adhesive label 1 is placed so that the opening 8 side is placed on an adherend 9 and pressed from the base 4 side, a pressure-sensitive adhesive adheres under pressure to the adherend 9 through the opening 8.

Thus, by setting the size, position, number, and the like of the openings 8 to be formed in the thermosensitive film 2 of the pressure-sensitive adhesive label 1 immediately before the use of the pressure-sensitive adhesive label 1, a pressure-sensitive adhesive region and a non-pressure-sensitive adhesive region, and pressure-sensitive adhesive strength of the pressure-sensitive adhesive region can be set in accordance with the purpose of use. As a precondition for enabling the magnitude of the pressure-sensitive adhesive strength to be set, it is necessary that the pressure-sensitive adhesive layer 3 to be exposed through the opening 8 and the adherend 9 come into and be maintained in contact with each other. Therefore, the diameter of the opening 8 is set to be equal to or more than 40 µm. When the diameter of the opening 8 becomes smaller than 40 µm, the pressure-sensitive adhesive strength between the pressure-sensitive adhesive layer 3 and the adherend 9 is degraded, and the resultant pressure-sensitive adhesive label 1 becomes unsuitable for practical use. It is preferred that the thickness of the pressure-sensitive adhesive layer 3 be set to 20 µm to 300 µm. When the pressure-sensitive adhesive layer 3 is formed so as to have a thickness less than 20 µm, the pressure-sensitive adhesive layer 3 does not easily come into contact with the surface of the adherend 9 through the opening 8, and sufficient pressure-sensitive adhesive strength cannot be ensured. When the thickness of the pressure-sensitive adhesive layer 3 is set to more than 300 µm, it becomes difficult to form the pressure-sensitive adhesive layer 3 itself.

Further, it is preferred that the pressure-sensitive adhesive strength with respect to the adherend 9 be 1 N/(50 mm width) to 20 N/(50 mm width). Note that, the pressure-sensitive adhesive strength of 1 N/(50 mm width) means the following: when the pressure-sensitive adhesive label 1 with a width of 50 mm is adhered to the adherend 9 such as a stainless steel plate, and one end thereof is bent by 180° and pulled toward the other end, a force of 1 N is required for peeling off the pressure-sensitive adhesive label 1 from the adherend 9. In the case where the pressure-sensitive adhesive strength is smaller than 1 N/(50 mm width), the pressure-sensitive adhesive strength is small, and in the case where the pressure-sensitive adhesive strength is more than 20 N/(50 mm width), the pressure-sensitive adhesive label 1 does not peel off easily from the adherend 9. Both the cases are not practical.

It is preferred that the thermosensitive film 2 be made of a material with good controllability and capable of forming the opening 8 to have a predetermined opening diameter when the thermosensitive film 2 is applied with heat. As the thermosensitive film 2, an olefin-based resin or an engineering plastic can be used. The olefm-based resin is used for many purposes as a general-purpose resin, and hence, can form the thermosensitive film 2 at low cost. As the olefin-based resin, any one or more of polyethylene (PE), polyvinyl chloride (PVC), polypropylene (PP), a multi-layer polyolefin-based resin in which PE and PP are stacked, polystyrene (PS), and polyethylene terephthalate (PET) can be used. As the olefm-based resin, a homopolymer, a copolymer, or a multistage polymer can be used. Polyolefin selected from the group consisting of the homopolymer, the copolymer, and the multistage polymer can also be used alone or in combination. Typical examples of the above-mentioned polymers include low-density polyethylene, linear low-density polyethylene, medium-density polyethylene, high-density polyethylene, ultrahigh molecular weight polyethylene, isotactic polypropylene, atactic polypropylene, polybutene, and ethylene propylene rubber.

Further, as the thermosensitive film 2, any one or more of a hybrid that is a stack type of PS and PET, an ethylene/vinyl acetate copolymer (EVA) based resin, a polyvinyl alcohol (PVA) based resin, a polylactic acid (PLA) based resin that is a plant-based material, and the like can be used. Further, a cellulose-based material that can be expected to lower the cost can be used. It is preferred to select a material whose contact angle with the pressure-sensitive adhesive layer 3 to be adjacent to the thermosensitive film 2 increases during heating. Further, a uniaxially stretched or biaxially stretched material which uses a stretching process can be used for forming the thermosensitive film 2. In the case of using a stretched film, there can be used a material which is stabilized chemically and mechanically by manipulating a glass transition point by copolymerizing a single monomer with another monomer or blending different kinds of components such as rubber.

The viscosity average molecular weight of the olefin-based resin is preferably 50,000 to 12,000,000, more preferably 50,000 to less than 2,000,000, most preferably 100,000 to less than 1,000,000. If the viscosity average molecular weight is 50,000 or more, the melt-tension at a time of melt molding becomes large to enhance moldability, which provides sufficient entanglement and tends to give high strength. If the viscosity average molecular weight is 12,000,000 or less, particularly, thickness stability is excellent.

It is preferred that the thermosensitive film 2 have a small heat capacity. More specifically, in the case where the heat capacity of the thermosensitive film 2 is smaller than that of the pressure-sensitive adhesive layer 3, when the thermosensitive film 2 is heated, the rise in temperature and melting of the thermosensitive film 2 are facilitated, and the pressure-sensitive adhesive layer 3 can be prevented from being deformed or denatured due to heat.

As illustrated in FIG. 2C, it is preferred that the base 4 be made of a material capable of enlarging a contact area between the pressure-sensitive adhesive layer 3 and the adherend 9 when pressure is applied from the base 4 side. Further, it is preferred that the base 4 be made of a material capable of maintaining the contact area for a long period of time. When a material having large stiffness is used as the base 4, the pressure-sensitive adhesive layer 3 does not easily come into contact with the surface of the adherend 9 through the opening 8, and the pressure-sensitive adhesive layer 3 peels off from the surface of the adherend 9 due to the stiffness of the base 4 after the contact, with the result that predetermined pressure-sensitive adhesive strength cannot be maintained. Thus, one of paper and a polyolefin-based polymer having small stiffness is used as the base 4.

Examples of the paper to be used as the base 4 include any one of glassine paper, high-quality paper, art paper, design paper, Japanese paper, a non-woven fabric, a synthetic resin, recycled paper, coated paper, fine coated paper, cast coated paper, and paper board. It is preferred that the high-quality paper contain, as its main ingredients, wooden pulp such as hardwood pulp (NBKP) and softwood pulp (LBKP), and a plant material such as straw, bagasse, and hemp, and not be coated with pigment coating. It is preferred that the high-quality paper be, of papers which are classified as printing information sheets in "Grade Classification Table of Paper and Paper Board" (published by Japan Paper Association) described in "Paper and Paper Board Statistical Chronology", paper which is classified as a non-coated printing sheet and paper which corresponds to continuous forms, PPC sheets, and the like classified as information sheets. It is preferred that the recycled paper be, of papers which are classified as the above-mentioned high-quality paper, a paper which uses a recycled waste-paper material.

The art paper and the coated paper are papers which are classified as coated printing sheets in the above-mentioned "Grade Classification Table of Paper and Paper Board" and include papers which are classified as lightweight coated paper. The fine coated paper includes paper which is classified as fine coated printing sheets 1 to 3 in the above-mentioned "Grade Classification Table of Paper and Paper Board". The design paper includes fancy paper, embossed paper, and the like classified as special printing sheets and other coating printing sheets.

The cast coated paper is cast coated paper classified as other printing sheets in the above-mentioned "Grade Classification Table of Paper and Paper Board", and is excellent in smoothness and used for advanced printing applications. The paper board is paper which is classified as cardboard base paper and packaging paper board in the above-mentioned "Grade Classification Table of Paper and Paper Board". The Japanese paper includes not only hand-made paper using a plant material such as paper mulberry and Edgeworthia chrysantha but also paper machine Japanese paper and the like imitating the hand-made paper. The non-woven fabric includes fabric which is formed into a sheet shape without using water as well. The synthetic paper is paper which is formed into a sheet shape by subjecting a synthetic resin material to axial stretching or the like.

Which of the above-mentioned materials is used as the base 4 is determined considering label applications and indication recording contents. For example, in the case where the pressure-sensitive adhesive label 1 is used for adhesion to various food wrapping labels and catalogues, posters, and the like, coated paper such as coated paper, art paper, and cast coated paper is preferred as the base 4. Further, in the case where the pressure-sensitive adhesive label 1 is used for special labels, design paper, a non-woven fabric, a synthetic paper, a paper board, or the like is suitable as the base 4. Further, in the case of mainly printing characters and bar codes to the base 4 and the indication layer, fine coated paper and high-quality paper are preferred as the base 4 and the indication layer. These examples are merely given for illustrative purposes, and as long as pressure-sensitive adhesive strength can be exhibited easily, any material can be used as the base 4. That is, the base 4 only needs to be adjusted appropriately depending upon the application.

As the base 4, a polyolefin-based polymer can be used. The polyolefin-based polymer uses a resin derived from a plant excellent in environment suitability, and has small low-temperature shrinking properties, soft body and natural shrinkage ratio, excellent rupture resistance, stiffness, and shrinking finish properties, and characteristics for suppressing natural shrinking and inter-layer peeling.

The pressure-sensitive adhesive layer 3 can be formed of one or at least two kinds selected from the group consisting of an acrylic pressure-sensitive adhesive, a rubber-based pressure-sensitive adhesive, a silicone-based pressure-sensitive adhesive, and a vinyl-based pressure-sensitive adhesive.

As described above, the pressure-sensitive adhesive label 1 according to the present invention does not use a release sheet. Thus, there is no release sheet to be discarded at a time of use, and hence, an environmental burden can be alleviated. Further, the pressure-sensitive adhesive label 1 can be reduced in thickness due to the absence of a release sheet, and hence, the number of pressure-sensitive adhesive labels per roll can be increased. Further, a material having small stiffness is used for the base 4. Therefore, when the thermosensitive film 2 is opened and pressure is applied from the base 4 side, the contact area between the pressure-sensitive adhesive layer 3 and the adherend 9 is enlarged, and hence desired adhesive strength can be ensured. Further, the contact area is maintained for a long period of time, and hence predetermined pressure-sensitive adhesive strength can be maintained.

FIG. 3 is a schematic cross-sectional view of a pressure-sensitive adhesive label 1 according to a second embodiment of the present invention. As illustrated in FIG. 3, the pressure-sensitive adhesive label 1 includes a base 4, a buffer member 7 provided on the base 4, a pressure-sensitive adhesive layer 3 provided on the buffer member 7, and a thermosensitive film 2 provided on the pressure-sensitive adhesive layer 3. The second embodiment is different from the first embodiment in that the buffer member 7 is present between the base 4 and the pressure-sensitive adhesive layer 3, and the other components are the same as those of the first embodiment.

The different point is described below, and the descriptions of the same components, which are the same as those of the first embodiment, are omitted. By inserting the buffer member 7 between the base 4 and the pressure-sensitive adhesive layer 3, (the effect of) the stiffness of the base 4 is reduced, and the force for peeling off the pressure-sensitive adhesive layer 3 from the surface of the adherend 9 is reduced. Consequently, the contact area between the pressure-sensitive adhesive layer 3 and the adherend 9 is maintained, and predetermined pressure-sensitive adhesive strength is sustained. As the buffer member 7, a material having a cushion property such as a non-woven fabric material can be used.

A label issuing device of the present invention includes a conveying part for conveying a pressure-sensitive adhesive label including a base, a pressure-sensitive adhesive layer provided on the base, and a thermosensitive film provided on the pressure-sensitive adhesive layer, a heating part for heating the thermosensitive film to form an opening to expose the pressure-sensitive adhesive layer, and a control part for controlling the conveying part and the heating part. If paper or a polyolefin-based polymer is used as the base, the base can serve as an indication layer.

The label issuing device of the present invention can set a pressure-sensitive adhesive region and a non-pressure-sensitive adhesive region immediately before the use of the pressure-sensitive adhesive label 1 in accordance with the purpose of use without using a large-scale production device. Further, the number, positions, and aperture ratio of openings to be formed in the pressure-sensitive adhesive region can be changed in accordance with the properties of an adherend and the use environment of the pressure-sensitive adhesive label. In addition, a release sheet is not required to be used, and the pressure-sensitive adhesive label 1 can be reduced in thickness due to the absence of a release sheet, and hence, the number of pressure-sensitive adhesive labels per roll can be increased. Further, an environmental burden can be reduced due to the absence of a release sheet.

Specific description is made. As the heating part, a thermal head or laser light can be used. When the thermal head is used, a large number of heat-generating parts can be arranged in a row, and hence, a large number of openings can be formed in the thermosensitive film 2 simultaneously in a row. The control part selects opening pattern information stored in advance and causes the heating part to generate heat to form a pressure-sensitive adhesive region including a plurality of openings in the thermosensitive film. The control part controls the conveying part to convey the pressure-sensitive adhesive label in a predetermined amount and causes the heat-generating part to generate heat. By repeating this process, a predetermined opening pattern is formed in the pressure-sensitive adhesive label.

An opening diameter of the opening can be controlled in accordance with the heat quantity applied by the heat-generating part. That is, in order to decrease an opening diameter, the heat quantity applied from the heat-generating part to the thermosensitive film is suppressed, and in order to increase an opening diameter, the heat quantity is increased. That is, the control part can control an opening diameter of the opening by controlling power supplied to the heat-generating part and heating time for heating the thermosensitive film. The pattern information of the opening is stored in advance, and the control part controls the heating part and the conveying part based on the pattern information of a selected opening pattern to form a pressure-sensitive adhesive region formed of the pattern of openings in the pressure-sensitive adhesive label. For example, an opening pattern in which a plurality of openings are arranged in vertical and horizontal directions, an opening pattern in which openings are arranged in a zigzag shape, an opening pattern in which openings are arranged in a honeycomb shape, or an opening pattern including a plurality of different sized or shaped openings can be selected to be formed.

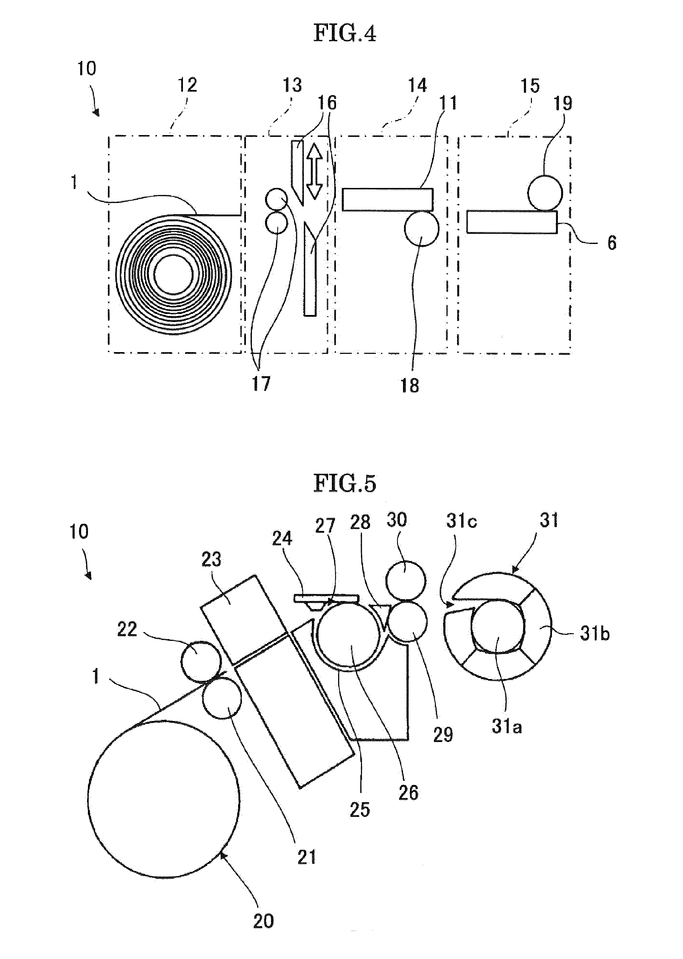

FIG. 4 is a schematic structural view of a label issuing device 10 according to a third embodiment of the present invention. The label issuing device 10 includes a roll sheet accommodating part 12 for accommodating the pressure-sensitive adhesive label 1, a roll sheet cutting part 13 for cutting the pressure-sensitive adhesive label 1, a label recording part 14 as a recording part for performing recording on the pressure-sensitive adhesive label 1, and a pressure-sensitive adhesiveness exhibiting part 15 for allowing the pressure-sensitive adhesive label 1 to exhibit pressure-sensitive adhesiveness. The roll sheet accommodating part 12 accommodates the pressure-sensitive adhesive label 1 rolled into a roll shape. The pressure-sensitive adhesive label 1 has a laminated structure including the base 4, the indication layer provided on the lower surface of the base 4, the pressure-sensitive adhesive layer 3 provided on the upper surface of the base 4, and the thermosensitive film 2 provided on a surface of the pressure-sensitive adhesive layer 3. The roll sheet cutting part 13 cuts the pressure-sensitive adhesive label 1 sent from conveying rollers 17 as the conveying part to a predetermined length by a cutter member 16. The label recording part 14 performs recording by a recording thermal head 11 on the indication layer of the pressure-sensitive adhesive label 1 placed on a conveying roller 18. As already described in the first or second embodiment, the pressure-sensitive adhesiveness exhibiting part 15 heats and opens the thermosensitive film 2 of the pressure-sensitive adhesive label 1, which is sandwiched between a conveying roller 19 as the conveying part and the thermal head 6, by the thermal head 6 as the heating part to expose the pressure-sensitive adhesive layer 3 through the opening 8.

Here, the thermal head 6 is provided with the heat-generating part in which a plurality of heat-generating bodies are arranged in parallel, and thus, can form the pressure-sensitive adhesive region in which a plurality of openings 8 are opened in parallel simultaneously. It is preferred that a heat-concentration type head be used as the heat-generating part. The heat-generating surface of the heat-generating part may have any shape such as a rectangle, a circle, an oval, a heart-like shape, or other shapes. A plurality of heat generating bodies can be formed at an arrangement density of 100 dpi to 600 dpi.

The label issuing device 10 can form the pressure-sensitive adhesive region including a plurality of openings 8 in a conveying direction of the pressure-sensitive adhesive label 1 by using the control part (not shown) to control the heating part and the conveying part. That is, the label issuing device 10 can form a required number of openings 8 at positions required in the pressure-sensitive adhesive label 1. In this manner, it is possible to control the position and size of the pressure-sensitive adhesive region in which pressure-sensitive adhesiveness of the pressure-sensitive adhesive label 1 is to be exhibited.

FIG. 5 is a schematic structural view of a label issuing device 10 according to a fourth embodiment of the present invention. The fourth embodiment is different from the third embodiment in that one thermal head 24 forms the openings 8 in the thermosensitive film 2, and records a character and the like on the indication layer. The identical parts or parts having the identical functions to those of the fourth embodiment are denoted by the identical reference symbols.

The label issuing device 10 includes a roll accommodating unit 20 for accommodating the pressure-sensitive adhesive label 1 rolled up into a roll shape, a cutter unit 23 for cutting the pressure-sensitive adhesive label 1, the thermal head 24 as the heating part for performing recording on the indication layer of the pressure-sensitive adhesive label 1 and forming the openings 8 in the thermosensitive film 2, a platen roller 26 for holding the pressure-sensitive adhesive label 1 at a time of recording by the thermal head 24 or forming of the openings 8, a roll-up device 31 for rolling up the pressure-sensitive adhesive label 1 onto a roll-up roller 31a and retaining the pressure-sensitive adhesive label 1 temporarily, conveying rollers 21, 29 and driven rollers 22, 30 as the conveying part for conveying the pressure-sensitive adhesive label 1, a conveying direction regulating unit 28 for regulating a conveying direction of the pressure-sensitive adhesive label 1, and a control part (not shown) for controlling energy imparted to the thermal head 24 and controlling the rotation of the conveying rollers 21, 29 and the platen roller 26.

The label issuing device 10 is operated as follows. The control part drives the conveying roller 21 and the driven roller 22 to pull out the rolled-up pressure-sensitive adhesive label 1 in the roll accommodating unit 20. The control part further delivers the pressure-sensitive adhesive label 1 having passed through the cutter unit 23 from a delivery path 27 and rotates the platen roller 26 in a clockwise direction so that the pressure-sensitive adhesive label 1 is sandwiched between the platen roller 26 and the thermal head 24. The control part further causes the heat-generating part of the thermal head 24 to generate heat and perform recording of printing information on the indication layer of the pressure-sensitive adhesive label 1. The control part rotates the conveying roller 29 and the roll-up roller 31a to guide the pressure-sensitive adhesive label 1 with the indication layer recorded from an insertion port 31c into the roll-up device 31, and rolls up the pressure-sensitive adhesive label 1 while pressing the pressure-sensitive adhesive label 1 onto the roll-up roller 31a with a guide 31b. The control part operates the cutter unit 23 to cut the pressure-sensitive adhesive label 1, to thus complete a recording operation.

Next, the control part rotates the conveying roller 29 to convey the cut portion of the pressure-sensitive adhesive label 1 to the position of the conveying roller 29 and the driven roller 30. Next, the control part drives the conveying direction regulating unit 28 to rotate the conveying roller 29 in a reverse direction and rotate the platen roller 26 in a clockwise direction, and inverts the pressure-sensitive adhesive label 1 through a conveying path 25 to sandwich the pressure-sensitive adhesive label 1 between the thermal head 24 and the platen roller 26. The control part causes the heat-generating part of the thermal head 24 to generate heat based on the selected pattern information and forms a predetermined pressure-sensitive adhesive region including a plurality of openings 8 in the thermosensitive film 2 of the pressure-sensitive adhesive label 1. The pressure-sensitive adhesive label 1 in which the pressure-sensitive adhesive region is formed is pulled out from the position of the conveying direction regulating unit 28 to the outside.

The shape and the like of the pressure-sensitive adhesive region are the same as described above, and hence, the descriptions thereof are omitted. Thus, the pressure-sensitive adhesive region and the non-pressure-sensitive adhesive region can be set immediately before the use of the pressure-sensitive adhesive label 1 in accordance with the purpose of use, and further, the number, positions, and aperture ratio of the openings 8 to be formed in the pressure-sensitive adhesive region can be changed in accordance with the properties of the adherend 9 and the use environment of the pressure-sensitive adhesive label 1.

The foregoing description has been given by way of example only and it will be appreciated by a person skilled in the art that modifications can be made without departing from the scope of the present invention.

## Claims

1. A pressure-sensitive adhesive label (1), comprising:
a base (4);
a pressure-sensitive adhesive layer (3) provided on the base; and
a thermosensitive film (2) provided on the pressure-sensitive adhesive layer, wherein:
the base (4) is made of one of paper and a polyolefin-based polymer;
the thermosensitive film (2) is opened by heating to expose the pressure-sensitive adhesive layer;
the thermosensitive film (2) is opened to form an opening with a diameter equal to or more than 40 µm;
the pressure-sensitive adhesive layer has a thickness in a range of from 20 µm to 300 µm; and
the pressure-sensitive adhesive label has pressure-sensitive adhesive strength with respect to an adherend of 1 N/(50 mm width) to 20 N/(50 mm width).

2. A pressure-sensitive adhesive label according to claim 1, wherein the paper comprises any one of glassine paper, high-quality paper, art paper, design paper, Japanese paper, a non-woven fabric, and a synthetic resin.

3. A pressure-sensitive adhesive label according to claim 1 or claim 2, further comprising a buffer member (7) between the base and the pressure-sensitive adhesive layer.

4. A pressure-sensitive adhesive label according to any one of the preceding claims, further comprising an indication layer on a side of the base (4) opposite to the pressure-sensitive adhesive layer (3).

5. A pressure-sensitive adhesive label according any one of claims 1 to 3, wherein the base (4) serves as an indication layer.

6. A pressure-sensitive adhesive label according to claim 4 or claim 5, wherein the indication layer comprises a thermosensitive color-developing layer.

7. A label issuing device (10), comprising:
a conveying part (17) for conveying a pressure-sensitive adhesive label (1) comprising a base (4), a pressure-sensitive adhesive layer (3) provided on the base, and a thermosensitive film (2) provided on the pressure-sensitive adhesive layer;
a heating part (6) for heating the thermosensitive film to form an opening (8) to expose the pressure-sensitive adhesive layer; and
a control part configured to control the conveying part and the heating part, to form an opening in the thermosensitive film with a diameter equal to or more than 40 µm, wherein:
the pressure-sensitive adhesive layer has a thickness in a range of from 20 µm to 300 µm; and
the pressure-sensitive adhesive label has pressure-sensitive adhesive strength with respect to an adherend of 1 N/(50 mm width) to 20 N/(50 mm width).

8. A label issuing device according to claim 7, wherein:
the pressure-sensitive adhesive label further comprises an indication layer on a side of the base (4) opposite to the pressure-sensitive adhesive layer; and
the heating part is configured to heat the indication layer to perform recording.

9. A label issuing device according to claim 7, wherein:
the base (4) of the pressure-sensitive adhesive label serves as an indication layer; and
the heating part is configured to heat the indication layer to perform recording.
